# EUROPÄISCHE PATENTANMELDUNG

(11) **EP 4 764 618 A1**
(43) Veröffentlichungstag der Anmeldung: **24.06.2026**
(21) Anmeldenummer: 25208230.0
(22) Anmeldetag: 13.10.2025
(51) Int. Cl.: G01V 8/20, G01V 8/22

(54) **ÜBERWACHUNGSEINRICHTUNG**

(30) Priorität: 18.12.2024 DE 202024107387 U
(71) Anmelder: Leuze electronic GmbH + Co. KG, 73277 Owen/Teck (DE)
(72) Erfinder: Eder, Alexander, 86928 Hofstetten (DE); Purgaj, Gerhard, 83026 Rosenheim (DE); Eberle, Andreas, 73252 Lenningen (DE); Stehle, Markus, 72587 Römerstein (DE)
(74) Vertreter: Ruckh, Rainer Gerhard

(57) **Zusammenfassung**

Die Erfindung betrifft eine Überwachungseinrichtung (100) mit einem Lichtvorhang (1) zur Überwachung eines Zugangs zu einem Gefahrenbereich, wobei der Lichtvorhang (1) zwei Sensoreinheiten aufweist, die an gegenüberliegenden Rändern des Zugangs angeordnet sind, und mit beweglich gelagerten Türelementen (18), die in ihren Sollpositionen in Randbereiche des Zugangs ragen. Bei Auslenkung wenigstens eines Türelements (18) aus der Sollposition wird eine Sicherheitsfunktion ausgelöst. Jede Sensoreinheit ist in einer Gerätesäule (16) angeordnet, wobei jeweils ein Türelement (18) fest mit einer Gerätesäule (16) verbunden ist und wobei die Gerätesäule (16) um ihre Längsachse drehbar ist.

## Beschreibung

Die Erfindung betrifft eine Überwachungseinrichtung.

Derartige Überwachungseinrichtungen weisen einen Sicherheitssensor in Form eines Lichtvorhangs und eine Sicherheitssteuerung auf, mit der eine Anlage gesteuert wird.

Der Begriff "sicher" bedeutet in diesem Fall, dass die jeweiligen Einheiten einen fehlersicheren Aufbau aufweisen und dabei die relevanten normativen Anforderungen erfüllen.

Mit dem Lichtvorhang wird ein Gefahrenbereich an der Anlage abgesichert. Insbesondere wird mit dem Lichtvorhang ein Zugang zum Gefahrenbereich überwacht.

Der Lichtvorhang weist eine Reihenanordnung von Strahlachsen bildenden Sender-Empfänger-Paaren auf, mittels derer ein flächiges, in einer Ebene verlaufendes Schutzfeld überwacht wird. Typischerweise weist der Lichtvorhang eine Sendereinheit, in der eine Reihenanordnung von Lichtstrahlen emittierenden Sendern integriert ist, und eine Empfängereinheit mit einer Reihenanordnung von Lichtstrahlen empfangenden Empfängern und einer Auswerteeinheit auf. Bei freiem Schutzfeld treffen die Lichtstrahlen jedes Senders auf einen zugeordneten Empfänger, welche somit ein Sender-Empfänger-Paar und eine Strahlachse des Lichtvorhangs bilden. Bei einem Objekteingriff im Schutzfeld werden durch das Objekt die Lichtstrahlen wenigstens einer Strahlachse unterbrochen.

Abhängig davon, ob ein Objekt im Schutzfeld vorhanden ist, generiert der Lichtvorhang ein Schaltsignal, in Abhängigkeit dessen die Sicherheitssteuerung die Anlage steuert. Befindet sich kein Objekt im Schutzfeld, ist das Schaltsignal in einem Schaltzustand, mit dem der Betrieb der Anlage freigegeben wird. Wird mit dem Lichtvorhang ein Objekt im Schutzfeld detektiert, wird mit dem Lichtvorhang ein Abschaltsignal, das heißt ein Schaltsignal mit einem Schaltzustand generiert, mit dem eine Sicherheitsfunktion derart ausgelöst wird, dass die Anlage stillgesetzt wird. Damit gehen von der Anlage keine Gefahren mehr aus, so dass insbesondere für eine Person, die durch das Schutzfeld des Lichtvorhangs in den Gefahrenbereich gelangt, keine Gefahr mehr besteht.

Typischerweise ist es während des Betriebs der Anlage erforderlich, dass zulässige Objekte d.h. nicht sicherheitskritische Objekte wie Paletten, Kisten oder dergleichen der Anlage zugeführt werden müssen. Hierzu müssen diese nicht sicherheitskritischen Objekte das Schutzfeld des Lichtvorhangs passieren.

Eine Auslösung der Sicherheitsfunktion wäre in diesem Fall unnötig und würde die Verfügbarkeit der Anlage durch ein unnötiges Stillsetzen durch eine Generierung eines Abschaltsignals im Lichtvorhang unnötig einschränken.

Um ein derartiges unnötiges Stillsetzen der Anlage zu vermeiden, ist es bekannt, den Lichtvorhang in einem Mutingbetrieb zu betreiben.

Hierzu werden mit geeigneten Muting-Sensoren nicht zulässige Objekte erkannt und identifiziert, bevor sie in das Schutzfeld eindringen. Abhängig von den Signalen der Muting-Sensoren wird der Lichtvorhang für ein vorgegebenes Zeitintervall, in dem ein zulässiges Objekt das Schutzfeld passiert, gemutet, das heißt stumm geschaltet, was bedeutet, dass die Sicherheitsfunktion des Lichtvorhangs überbrückt wird, das heißt der Lichtvorhang generiert kein Abschaltsignal, wenn das nicht sicherheitskritische Objekt das Schutzfeld passiert.

Bei einem Muting wird im einfachsten Fall der gesamte Lichtvorhang gemutet, so dass unabhängig davon, welche und wieviele Strahlachsen des Lichtvorhangs durch das zulässige Objekte unterbrochen werden, die Sicherheitsfunktion des Lichtvorhangs überbrückt wird.

Generell ist es auch bekannt, ein partielles Muting durchzuführen. In diesem Fall wird nur ein Teil der Strahlachsen des Lichtvorhangs gemutet, so dass ein Eindringen eines Objekts in den Bereich dieser Strahlachsen nicht zur Auslösung der Sicherheitsfunktion führt. Die restlichen Strahlachsen des Lichtvorhangs werden nicht gemutet, was bedeutet, dass ein Eindringen eines Objekts in den Bereich dieser Strahlachsen zum Auslösen der Sicherheitsfunktion führt.

Dieses partielle Muting ist dann sinnvoll, wenn die Größen von zulässigen Objekten bekannt sind, so dass dann nur der Bereich der Strahlachsen gemutet wird, der von diesen bekannten zulässigen Objekten unterbrochen wird. Für die restlichen Strahlachsen bleibt die Überwachungsfunktion des Lichtvorhangs erhalten, was die Sicherheit der Überwachungseinrichtung erhöht.

So können beispielsweise Manipulationen derart erkannt werden, dass eine Person auf einem zulässigen Objekt wie einer Kiste sitzend versucht das Schutzfeld des Lichtvorhangs zu passieren. Der Lichtvorhang ist zwar bei Passieren des zulässigen Objekts partiell gemutet, jedoch nicht in dem Bereich, in dem sich die Person befindet, so dass die Person vom Lichtvorhang als nicht zulässiges Objekt erkannt wird, was zur Auslösung der Sicherheitsfunktion führt.

Für den Fall, dass im Zugang zum Gefahrenbereich einer Anlage eine Fördereinheit verläuft, auf der zulässige Objekte transportiert werden, entsteht bei einem Muting des Lichtvorhangs ein weiteres Sicherheitsrisiko.

In diesem Fall sind die Zwischenräume zwischen den zulässigen Objekten und Randbegrenzungen des Zugangs, die typischerweise von Umzäunungen gebildet sind, ungesichert.

Bei einem Muting des Lichtvorhangs kann eine Person seitlich am zulässigen Objekt durch den Zwischenraum zwischen Umzäunung und zulässigem Objekt gelangen, ohne dass der Lichtvorhang die Sicherheitsfunktion auslöst.

Um derartige Gefahrensituationen zu unterbinden ist es bekannt, diese Zwischenräume mit an Randbegrenzungen angeordneten Schwingtüren zu sichern. Die Schwingtüren erstrecken sich bis direkt an das zulässige Objekt, so dass eine Person nicht zwischen zulässigem Objekt und Schwingtür hindurchtreten kann, ohne die Schwingtür auszulenken. Wird die Schwingtür ausgelenkt, wird dies sensorisch erfasst und die Sicherheitsfunktion wird ausgelöst.

Nachteilig hierbei ist, dass die Schwingtüren und der Lichtvorhang räumlich getrennte und separat zu installierende Einheiten bilden, was einen unerwünscht hohen Konstruktions- und Installationsaufwand mit sich bringt.

Der Erfindung liegt die Aufgabe zugrunde, eine Überwachungseinrichtung bereitzustellen, die bei einfachem Aufbau eine hohe Funktionalität aufweist.

Zur Lösung dieser Aufgabe sind die Merkmale der unabhängigen Ansprüche beschrieben. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem Lichtvorhang zur Überwachung eines Zugangs zu einem Gefahrenbereich, wobei der Lichtvorhang zwei Sensoreinheiten aufweist, die an gegenüberliegenden Rändern des Zugangs angeordnet sind, und mit beweglich gelagerten Türelementen, die in ihren Sollpositionen in Randbereiche des Zugangs ragen. Bei Auslenkung wenigstens eines Türelements aus der Sollposition wird eine Sicherheitsfunktion ausgelöst. Jede Sensoreinheit ist in einer Gerätesäule angeordnet wobei jeweils ein Türelement fest mit einer Gerätesäule verbunden ist und wobei die Gerätesäule um ihre Längsachse drehbar ist.

Die erfindungsgemäße Überwachungseinrichtung weist als wesentliche Sicherheitskomponente einen Sicherheitssensor in Form eines Lichtvorhangs auf. Mit dem Lichtvorhang wird ein Zugang zu einem Gefahrenbereich an einer Anlage überwacht, die von einer Sicherheitssteuerung gesteuert wird.

Der Lichtvorhang umfasst generell zwei Sensoreinheiten, die an gegenüberliegenden Rändern des Zugangs angeordnet sind, wobei die Ränder des Zugangs vorteilhaft durch Randbegrenzungen wie z.B. Umzäunungen gesichert sind.

Gemäß einer ersten Variante weist der Lichtvorhang als erste Sensoreinheit eine Sendereinheit mit einer Reihenanordnung von Lichtstrahlen emittierenden Sendern und als zweite Sensoreinheit eine Empfängereinheit mit einer Reihenanordnung von Lichtstrahlen empfangenden Empfängern auf.

Gemäß einer zweiten Variante weist der Lichtvorhang als erste Sensoreinheit eine Sender-Empfängereinheit mit einer Mehrfachanordnung von Lichtstrahlen emittierenden Sendern und Lichtstrahlen empfangenden Empfängern sowie eine zweite Sensoreinheit in Form einer Reflektoreinheit auf.

In beiden Fällen bildet jeweils ein Sender mit einem zugeordneten Empfänger ein Sender-Empfänger-Paar, dessen Lichtstrahlen eine Strahlachse ausbilden.

Befindet sich kein Objekt im Schutzfeld treffen die durch das Schutzfeld geführten Lichtstrahlen eines Senders einer Strahlachse auf den zugeordneten Empfänger. Bei einem Objekteingriff im Schutzfeld wird wenigstens eine Strahlachse unterbrochen.

In einem Normalbetrieb des Lichtvorhangs generiert dieser bei Registrieren eines Objekteingriffs im Schutzfeld ein Schaltsignal, mit dem eine Sicherheitsfunktion ausgelöst wird, z.B. die überwachte Anlage stillgesetzt wird.

Weiterhin ist in einem Mutingbetrieb des Lichtvorhangs das Schutzfeld komplett oder partiell überbrückt, wobei ein Objekteingriff im überbrückten Teil des Schutzfelds nicht zur Auslösung der Sicherheitsfunktion führt.

Dabei ist der Mutingbetrieb aktiviert, während ein zulässiges Objekt das Schutzfeld passiert.

Dabei passiert das zulässige Objekt das Schutzfeld in dessen überbrückten Bereich, so dass das zulässige Objekt das Schutzfeld passiert, ohne dass der Lichtvorhang die Sicherheitsfunktion auslöst.

Zur Steuerung des Mutingbetriebs sind vorteilhaft Mutingsensoren vorhanden mittels derer zulässige Objekte identifizierbar sind. Abhängig von Mutingsignalen des Mutingsensors erfolgt eine Aktivierung oder Deaktivierung des Mutingbetriebs.

Alternativ werden Mutingsignale, mittels derer der Mutingbetrieb aktiviert oder deaktiviert wird, von einer Steuerung vorgegeben.

Diese Art der Mutingsteuerung ist als Smart Process Gating (SPG) bekannt. Auch kann ein Mutingbetrieb abhängig von Signalen des Lichtvorhangs selbst generiert werden. Bei dieser Art des SPG erwartet der Lichtvorhang, dass innerhalb einer Zeit X nach Anlegen eines Gatingsignals auch eine Unterbrechung mindestens einer der Lichtstrahlen des Lichtvorhangs erfolgt.

Die Steuerung kann insbesondere die die Anlage steuernde Sicherheitssteuerung sein.

Damit führen zulässige Objekte, d.h. nicht sicherheitskritische Objekte wie z.B. Kisten, Paletten oder dergleichen nicht zu einem Auslösen der Sicherheitsfunktion und damit nicht zu einem unnötigen Stillstand der Anlage.

Ein sicherheitstechnisches Problem ergibt sich jedoch, wenn sich eine Person seitlich hinter einem zulässigen Objekt versteckt, was vom Lichtvorhang nicht detektiert werden kann.

Um dieses Problem zu lösen sind seitlich zu zulässigen Objekten Türelemente als zusätzliche Schutzeinrichtungen vorgesehen.

Die erfindungsgemäße Überwachungseinrichtung ist insbesondere derart ausgebildet, dass durch den Zugang eine Fördereinheit verläuft, auf welcher zulässige Objekte transportiert werden, und dass die Breiten der Türelemente so dimensioniert sind, dass durch die Lücken zwischen den Türelementen und dem zulässigen Objekt keine Person passieren kann.

Dabei überschreiten die Größen der Lücken zwischen den Türelementen und einem zulässigen Objekt einen vorgegebenen Maximalwert nicht.

Damit ist gewährleistet, dass in einem Mutingbetrieb, in dem das Schutzfeld im Bereich eines passierenden zulässigen Objekts überbrückt wird, eine Person sich seitlich am zulässigen Objekt versteckend das Schutzfeld passieren kann, ohne die Sicherheitsfunktion auszulösen. Passiert nämlich die Person dort das Schutzfeld muss sie eines der Türelemente aus seiner Sollposition auslenken, was zur Auslösung der Sicherheitsfunktion führt.

Ein wesentlicher Aspekt der Erfindung besteht darin, dass jedes Türelement mit einer Gerätesäule verbunden ist, in der eine Sensoreinheit des Lichtvorhangs gelagert ist. Die Gerätesäulen bewirken einen mechanischen Schutz der Sensoreinheiten und ermöglichen zudem eine Justage der Sensoreinheiten relativ zueinander.

Die Türelemente bilden Baueinheiten mit den Gerätesäulen, die wiederum Zusatzkomponenten des Lichtvorhangs bilden. Da die Türelemente fest mit jeweils einer Gerätesäule verbunden sind, entfällt ein separater Montageort für die Türelemente und insbesondere auch separate Montageschritte zur Installation der Türelemente.

Vorteilhaft ist jedes Türelement in einer in Längsrichtung der Gerätesäule verlaufenden Nut gelagert.

Weiter vorteilhaft ist jedes Türelement von einer durchsichtigen Platte oder einem Zaunelement gebildet.

Das so gebildete Türelement weist einen einfachen, funktionalen Aufbau auf und kann einfach an der Gerätesäule montiert werden.

Die Sicherheitsfunktionalität der Türelemente ist derart, dass dann, wenn eine Person gegen ein Türelement stößt, die Gerätesäule mit dem daran gelagerten Türelement aus einer Nullposition ausgelenkt wird, was einem Bewegen des Türelements aus seiner Sollposition heraus entspricht. Diese Bewegung wird elektronisch überwacht, wodurch die Sicherheitsfunktion ausgelöst wird und unkontrollierte Gefahrenzustände vermieden werden.

Gemäß einer konstruktiv vorteilhaften Ausgestaltung ist jede Gerätesäule auf einem Grundkörper um ihre Längsachse drehbar gelagert.

Vorteilhaft weist jeder Grundkörper Justagemittel auf, mittels derer die Drehlage und Neigung der jeweiligen Gerätesäule einstellbar ist.

Vorteilhaft ist jede Gerätesäule in einer Nullposition durch eine Rastverbindung fixiert, wobei sich in der Nullposition der Gerätesäule das daran befestigte Türelement in seiner Sollposition befindet.

Insbesondere ist die Rastverbindung von wenigstens einem am Grundkörper gelagerten Kugelstift und einer Rastaufnahme an einer Auflageplatte der Gerätesäule gebildet.

Die Gerätesäule ist damit in ihrer Nullposition gesichert. Jedoch ist die mit der Rastverbindung bewirkte Rastkraft so gering, dass bei einem Stoß gegen ein Türelement die Rastverbindung der zugeordneten Gerätesäule gelöst wird und das Türelement mit der Gerätesäule aus der Sollposition herausgedreht wird.

Um bei einem Auslenken des Türelements die Sicherheitsfunktion auszulösen wird die Sollposition jedes Türelements mit Sensormitteln überwacht.

Vorteilhaft erfolgt dies dadurch, indem sensorisch überwacht wird, ob sich die Gerätesäule in der Nullposition befindet.

Gemäß einer ersten Variante sind die Sensormittel vom Lichtvorhang gebildet.

Dabei sind die Sensormittel von einer nicht überbrückten Strahlachse des Lichtvorhangs gebildet.

Eine Auslenkung eines Türelements wird dadurch detektiert, dass eine Gerätesäule und damit eine Sensoreinheit des Lichtvorhangs gedreht wird, so dass die Lichtstrahlen der Strahlachse nicht mehr auf den zugeordneten Empfänger treffen.

Gemäß einer zweiten Variante sind die Sensormittel von einem am Grundkörper angeordneten Schaltmittel gebildet, welche ein die Nullposition kennzeichnendes Referenzziel detektieren.

Dann wird abhängig von Signalen der Sensormittel die Sicherheitsfunktion ausgelöst.

Die Erfindung wird im Folgenden anhand der Zeichnungen erläutert. Es zeigen:
- Figur 1:: Schematische Darstellung eines ersten Beispiels eines Lichtvorhangs.
- Figur 2:: Schematische Darstellung eines zweiten Beispiels eines Lichtvorhangs.
- Figur 3:: Ausführungsbeispiel der erfindungsgemäßen Überwachungseinrichtung.
- Figur 4:: Darstellung der Komponenten der Überwachungseinrichtung gemäß Figur 3.

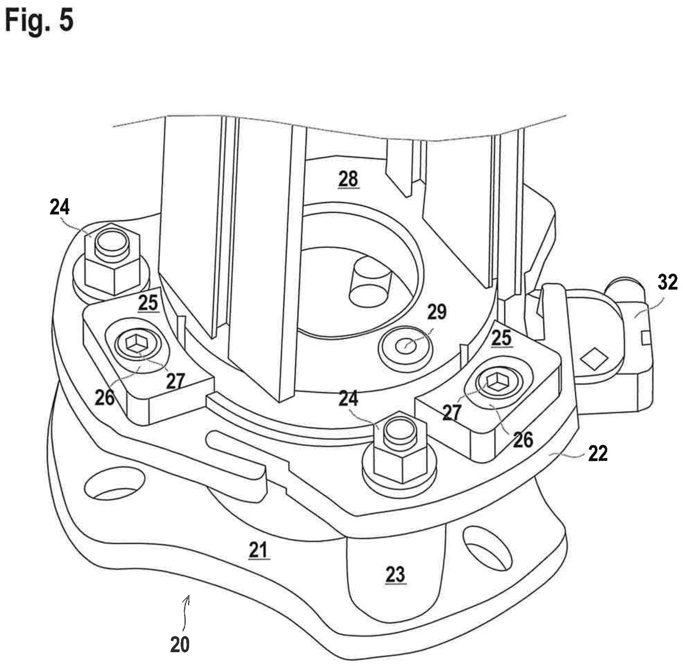

- Figur 5:: Teildarstellung einer Gerätesäule der Anordnung gemäß Figur 4.
- Figur 6:: Detail der Anordnung gemäß Figur 5

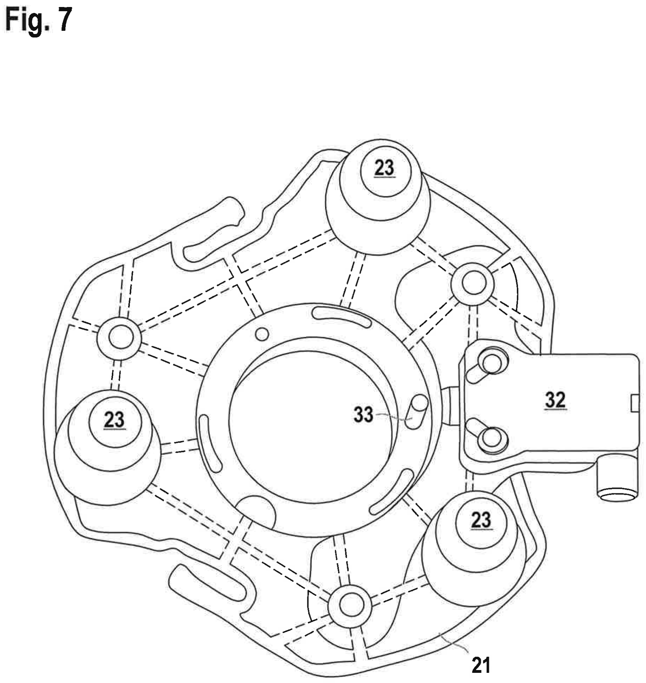

- Figur 7:: Draufsicht auf die Unterseite der Anordnung gemäß Figur 5.

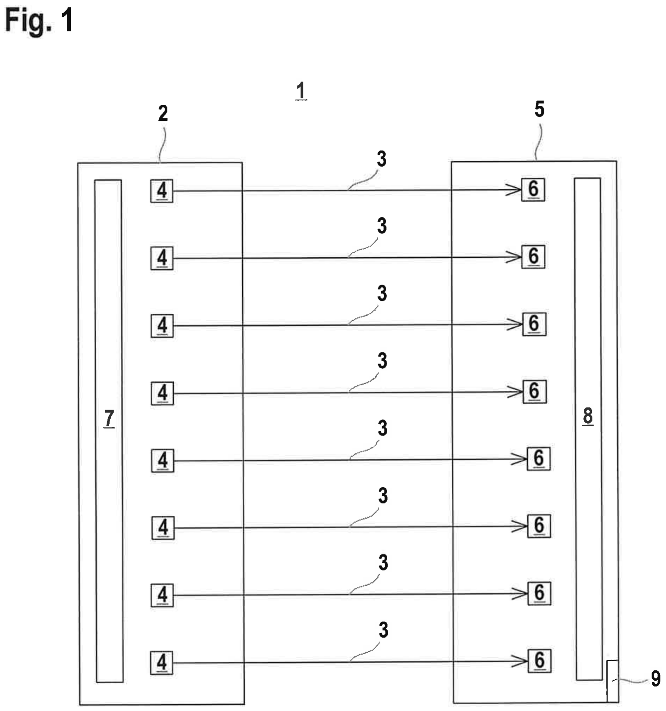

Figur 1 zeigt den Aufbau eines Lichtvorhangs 1. Der Lichtvorhang 1 umfasst als erste Sensoreinheit eine Sendereinheit 2, in deren Gehäuse eine Reihenanordnung von Lichtstrahlen 3 emittierenden Sendern 4 angeordnet ist. Der Lichtvorhang 1 weist weiterhin als zweite Sensoreinheit eine Empfängereinheit 5 auf, in deren Gehäuse eine Reihenanordnung von Lichtstrahlen 3 empfangenden Empfängern 6 vorgesehen ist.

Die Sendereinheit 2 und die Empfängereinheit 5 sind an gegenüberliegenden Rändern eines Schutzfelds angeordnet. Bei freiem Schutzfeld treffen die von jeweils einem Sender 4 emittierten Lichtstrahlen 3 auf einen zugeordneten, gegenüberliegenden Empfänger 6. Ein Sender 4 und der hierzu zugeordnete Empfänger 6 bilden jeweils ein Sender-Empfänger-Paar und eine Strahlachse des Lichtvorhangs 1. Der Senderbetrieb wird durch eine Steuereinheit 7 in der Sendereinheit 2 gesteuert. Der Empfängerbetrieb wird durch eine Auswerteeinheit 8 in der Empfängereinheit 5 gesteuert. Die Sender 4 und Empfänger 6 der einzelnen Strahlachsen werden durch eine optische Synchronisierung des Lichtvorhangs 1 zyklisch einzeln oder zu mehreren nacheinander aktiviert. Mit den parallel verlaufenden Lichtstrahlen 3 der Strahlachsen wird ein in einer Ebene verlaufendes Schutzfeld überwacht.

In der Auswerteeinheit 8 werden hierzu die Empfangssignale der Empfänger 6 ausgewertet. Abhängig hiervon werden in der Auswerteeinheit 8 Schaltsignale generiert, die über eine Ausgangsstruktur 9 ausgegeben werden.

Der Lichtvorhang 1 bildet einen Sicherheitssensor für den Einsatz im Bereich der Sicherheitstechnik. Hierzu weist der Lichtvorhang 1 einen fehlersicheren Aufbau auf. Insbesondere weist die Auswerteeinheit 8 einen mehrkanaligen, redundanten Aufbau auf, beispielsweise in Form zweier sich zyklisch überwachender Rechnereinheiten.

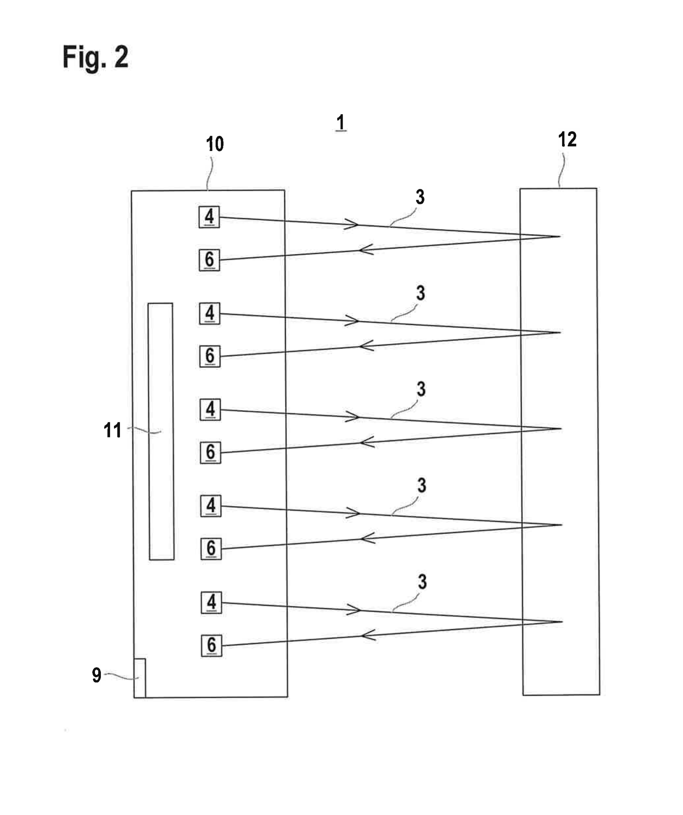

Figur 2 zeigt ein Ausführungsbeispiel eines Lichtvorhangs 1 mit einer Sender-Empfängereinheit 10 als erster Sensoreinheit. Diese weist eine Reihenanordnung von Sender-Empfänger-Paaren auf, die an eine Steuer/Auswerteeinheit 11 angeschlossen sind. Als zweite Sensoreinheit ist eine Reflektoreinheit 12 vorgesehen. Bei freiem Schutzfeld werden die Lichtstrahlen 3 der Sender-Empfänger-Paare ein erstes Mal durch das Schutzfeld geführt, dann an der Reflektoreinheit 12 reflektiert und nochmals durch das Schutzfeld zum zugeordneten Empfänger 6 geführt.

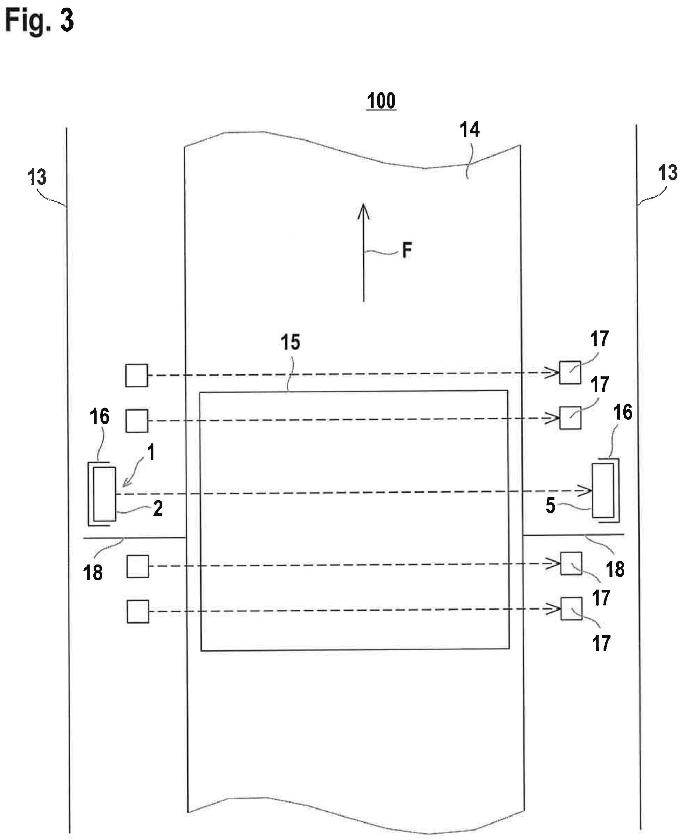

Figur 3 zeigt ein Ausführungsbeispiel der erfindungsgemäßen Überwachungseinrichtung 100, mit der ein Zugang zu einem Gefahrenbereich an einer Anlage überwacht wird.

In einem von einer Umzäunung 13 begrenzten Zugangsbereich verläuft eine Fördereinheit 14, auf welche zulässige Objekte 15 wie z.B. Kisten in einer Förderrichtung F der Anlage zugeführt werden können.

Zur Überwachung des Zugangs ist ein Lichtvorhang 1, im vorliegenden Fall der Lichtvorhang 1 gemäß Figur 1, vorgesehen. Die Sendereinheit 2 und die Empfängereinheit 5 sind an gegenüberliegenden Rändern des Zugangs angeordnet und jeweils in einer Gerätesäule 16 gelagert. Die Längsachsen der Sendereinheit 2 und der Empfängereinheit 5 und damit der Gerätesäule 16 verlaufen in vertikaler Richtung senkrecht zur Ebene der Fördereinheit 14.

Beidseits des Lichtvorhangs 1 sind Mutingsensoren 17 angeordnet, mittels derer zulässige Objekte 15 identifiziert werden können. Die Mutingsensoren 17 können beispielsweise von Lichtschranken gebildet sein.

Mit jeder Gerätesäule 16 ist jeweils ein Türelement 18 als weitere Schutzvorrichtung fest verbunden. Beispielweise ist das Türelement 18 in einer Nut der Gerätesäule 16 gelagert und dort mittels Schraubverbindungen oder dergleichen fixiert. Die Gerätesäulen 16 können um ihre Längsachse gedreht werden, wodurch die Türelemente 18 eine Schwenkbewegung ausführen.

Mit den Türelementen 18 wird der Zwischenraum zwischen der Umzäunung 13 und einem zulässigen Objekt 15 abgesichert. Die Türelemente 18 reichen hierzu bis dicht vor das zulässige Objekt 15, so dass zwischen Türelement 18 und zulässigem Objekt 15 keine Person durchtreten kann, ohne die Türelemente 18 zu schwenken.

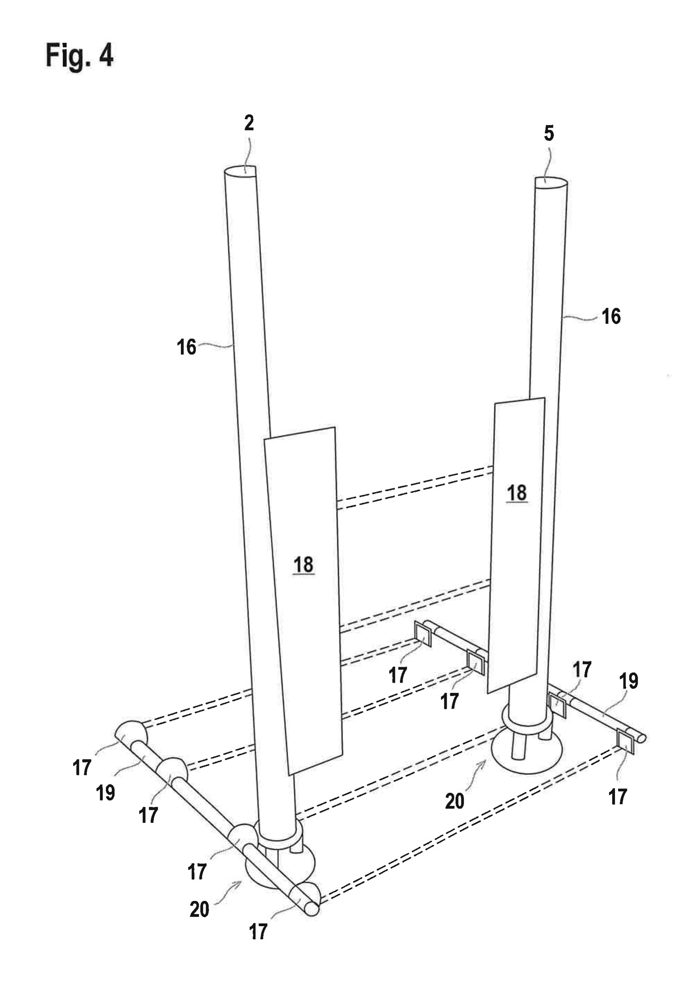

Figur 4 zeigt die Komponenten der Überwachungseinrichtung 100, nämlich die an Trägern 19 gelagerten Mutingsensoren 17, die Sendereinheit 2 und Empfängereinheit 5 des Lichtvorhangs 1 in der Gerätesäule 16 mit den daran gelagerten Türelementen 18, die im vorliegenden Fall aus durchsichtigen Platten bestehen.

Die Figuren 3 und 4 zeigen die Türelemente 18 in ihren Sollpositonen.

In einem Mutingbetrieb des Lichtvorhangs 1 ist das Schutzfeld komplett oder partiell überbrückt, wobei ein Objekteingriff im überbrückten Teil des Schutzfelds nicht zur Auslösung der Sicherheitsfunktion führt.

Dabei ist der Mutingbetrieb aktiviert, während ein zulässiges Objekt 15 das Schutzfeld passiert.

Generell passiert das zulässige Objekt 15 das Schutzfeld in dessen überbrückten Bereich, so dass das zulässige Objekt 15 das Schutzfeld passiert, ohne dass der Lichtvorhang 1 die Sicherheitsfunktion auslöst.

Der Mutingbetrieb wird abhängig von den Mutingsignalen der Mutingsensoren 17 gesteuert.

Im Mutingbetrieb übernehmen die Türelemente 18 eine Überwachungsfunktion derart, dass bei Auslenken wenigstens eines Türelements 18 aus seiner Sollposition die Sicherheitsfunktion ausgelöst wird. Dadurch wird verhindert, dass sich eine Person seitlich hinter einem zulässigen Objekt 15 versteckt und so unbemerkt zur Anlage gelangt.

Wie Figur 3 und insbesondere Figur 4 zeigt ist jede Gerätesäule 16 auf einem Grundkörper 20 gelagert. Die Gerätesäule 16 ist ein hohlzylindrischer Körper mit einer offenen Frontseite, durch welche die Lichtstrahlen 3 des Lichtvorhangs 1 geführt sind.

Wie Figur 3 zeigt weist der Grundkörper 20 zwei Plattenkörper 21, 22 auf, zwischen welche Stellfüße 23 gelagert sind, die durch Stellschrauben 24 betätigt werden können, wodurch eine Neigungsverstellung der Gerätesäule 16 ermöglicht ist.

Auf dem oberen Plattenkörper 22 ist eine Grundplatte 25 gelagert, die Laschen mit Langlöchern 26 aufweist, durch welche Justierschrauben 27 geführt sind. Durch Positionierung der Justierschrauben 27 in den Langlöchern 26 erfolgt eine Justage der Drehlage der um ihre vertikale Längsachse drehbaren Gerätesäule 16.

Konzentrisch zu der Grundplatte 25 und den Plattenkörpern 21, 22 liegt eine Auflageplatte 28 auf der Grundplatte 25 auf.

Auf der Auflageplatte 28 befindet sich eine Dosenlibelle 29 zur Einstellung einer Nullposition der Gerätesäule 16, die die Sollposition des daran befestigten Türelements 18 definiert.

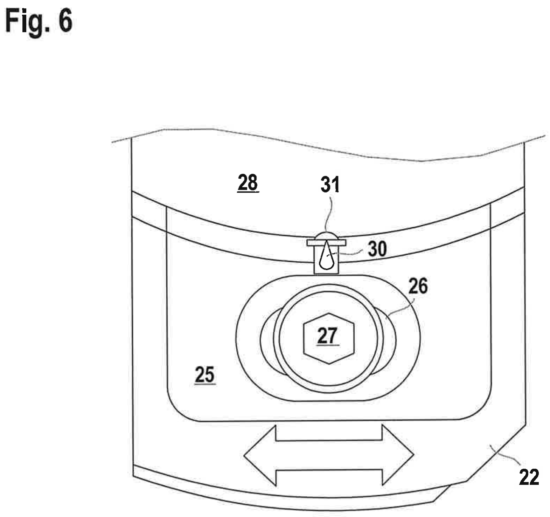

Die Nullposition der Gerätesäule 16 wird durch eine Rastverbindung gesichert, die einen Kugelstift 30 an der Grundplatte 25 und eine Rastaufnahme 31 an der Auflageplatte 28 aufweist (Figur 6).

Die Nullposition der Gerätesäule 16 wird mit Sensormitteln überprüft. Im vorliegenden Fall sind die Sensormittel von einem Tastsensor 32 gebildet, der ein Referenzziel in Form eines Auslösestifts 33 erfasst, wenn sich die Gerätesäule 16 in der Nullposition befindet und damit das Türelement 18 in der Sollposition wie in Figur 3 dargestellt.

Die Funktionsweise der von den Türelementen 18 gebildeten Schutzeinrichtung ist derart, dass bei einem Stoß gegen ein Türelement 18 die Rastverbindung der zugeordneten Gerätesäule 16 gelöst wird und das Türelement 18 mit der Gerätesäule 16 aus der Sollposition herausgedreht wird.

Dies wird von den Sensormitteln erkannt.

Ein Herausschwenken eines Türelements 18 aus seiner Sollposition stellt eine Gefahrensituation insbesondere im Mutingbetrieb des Lichtvorhangs 1 dar. Daher führt das Auslenken eines Türelements 18 zur Auslösung der Sicherheitsfunktion und damit zum Stillsetzen der Anlage.

### Bezugszeichenliste

- (1): Lichtvorhang
- (2): Sendereinheit
- (3): Lichtstrahl
- (4): Sender
- (5): Empfängereinheit
- (6): Empfänger
- (7): Steuereinheit
- (8): Auswerteeinheit
- (9): Ausgangsstruktur
- (10): Sender-Empfängereinheit
- (11): Steuer/Auswerteeinheit
- (12): Reflektoreinheit
- (13): Umzäunung
- (14): Fördereinheit
- (15): zulässiges Objekt
- (16): Gerätesäule
- (17): Mutingsensor
- (18): Türelement
- (19): Träger
- (20): Grundkörper
- (21): Plattenkörper
- (22): Plattenkörper
- (23): Stellfuß
- (24): Stellschaube
- (25): Grundplatte
- (26): Langloch
- (27): Justierschraube
- (28): Auflageplatte
- (29): Dosenlibelle
- (30): Kugelstift
- (31): Rastaufnahme
- (32): Tastsensor
- (33): Auslösestift
- (100): Überwachungseinrichtung

- (F): Förderrichtung

## Patentansprüche

1. Überwachungseinrichtung (100) mit einem Lichtvorhang (1) zur Überwachung eines Zugangs zu einem Gefahrenbereich, wobei der Lichtvorhang (1) zwei Sensoreinheiten aufweist, die an gegenüberliegenden Rändern des Zugangs angeordnet sind, und mit beweglich gelagerten Türelementen (18), die in ihren Sollpositionen in Randbereiche des Zugangs ragen, wobei bei Auslenkung wenigstens eines Türelements (18) aus der Sollposition eine Sicherheitsfunktion ausgelöst wird, **dadurch gekennzeichnet, dass** jede Sensoreinheit in einer Gerätesäule (16) angeordnet ist wobei jeweils ein Türelement (18) fest mit einer Gerätesäule (16) verbunden ist und wobei die Gerätesäule (16) um ihre Längsachse drehbar ist.

2. Überwachungseinrichtung (100) nach Anspruch 1, **dadurch gekennzeichnet, dass** durch den Zugang eine Fördereinheit (14) verläuft, auf welcher zulässige Objekte (15) transportiert werden, und dass die Breiten der Türelemente (18) so dimensioniert sind, dass durch die Lücken zwischen den Türelementen (18) und dem zulässigen Objekt (15) keine Person passieren kann.

3. Überwachungseinrichtung (100) nach Anspruch 2, **dadurch gekennzeichnet, dass** die Größen der Lücken zwischen den Türelementen (18) und einem zulässigen Objekt (15) einen vorgegebenen Maximalwert nicht überschreiten.

4. Überwachungseinrichtung (100) nach einem der Ansprüche 1 bis 3, **dadurch gekennzeichnet, dass** der Lichtvorhang (1) als erste Sensoreinheit eine Sendereinheit (2) mit einer Reihenanordnung von Lichtstrahlen (3) emittierenden Sendern (4) und als zweite Sensoreinheit eine Empfängereinheit (5) mit einer Reihenanordnung von Lichtstrahlen (3) empfangenden Empfängern (6) aufweist, oder dass der Lichtvorhang (1) als erste Sensoreinheit eine Sender-Empfängereinheit (10) mit einer Mehrfachanordnung von Lichtstrahlen (3) emittierenden Sendern (4) und Lichtstrahlen (3) empfangenden Empfängern (6) sowie eine zweite Sensoreinheit in Form einer Reflektoreinheit (12) aufweist.

5. Überwachungseinrichtung (100) nach einem der Ansprüche 1 bis 4, **dadurch gekennzeichnet, dass** der Lichtvorhang (1) ein Sicherheitssensor ist.

6. Überwachungseinrichtung (100) nach einem der Ansprüche 1 bis 5, **dadurch gekennzeichnet, dass** der Lichtvorhang (1) ein Schutzfeld überwacht, wobei in einem Normalbetrieb der Lichtvorhang (1) bei Registrieren eines Objekteingriffs im Schutzfeld ein Schaltsignal generiert mit dem eine Sicherheitsfunktion generiert wird, und dass in einem Mutingbetrieb des Lichtvorhangs (1) das Schutzfeld komplett oder partiell überbrückt ist, wobei ein Objekteingriff im überbrückten Teil des Schutzfelds nicht zur Auslösung der Sicherheitsfunktion führt.

7. Überwachungseinrichtung (100) nach Anspruch 6, **dadurch gekennzeichnet, dass** der Mutingbetrieb aktiviert ist, während ein zulässiges Objekt (15) das Schutzfeld passiert, wobei das zulässige Objekt (15) das Schutzfeld in dessen überbrückten Bereich passiert, so dass das zulässige Objekt (15) das Schutzfeld passiert, ohne dass der Lichtvorhang (1) die Sicherheitsfunktion auslöst.

8. Überwachungseinrichtung (100) nach Anspruch 7, **dadurch gekennzeichnet, dass** Mutingsensoren (17) vorhanden sind mittels derer zulässige Objekte (15) identifizierbar sind, wobei abhängig von Mutingsignalen des Mutingsensors (17) eine Aktivierung oder Deaktivierung des Mutingbetriebs erfolgt, oder dass Mutingsignale, mittels derer der Mutingbetrieb aktiviert oder deaktiviert wird, von einer Steuerung vorgegeben werden, und/oder dass der Mutingbetrieb mittels einer Gatingfunktion aktivierbar ist.

9. Überwachungseinrichtung (100) nach einem der Ansprüche 1 bis 8, **dadurch gekennzeichnet, dass** jede Gerätesäule (16) auf einem Grundkörper (20) um ihre Längsachse drehbar gelagert ist, wobei jede Gerätesäule (16) in einer Nullposition durch eine Rastverbindung fixiert ist, wobei sich in der Nullposition der Gerätesäule (16) das daran befestigte Türelement (18) in seiner Sollposition befindet.

10. Überwachungseinrichtung (100) nach Anspruch 9, **dadurch gekennzeichnet, dass** bei einem Stoß gegen ein Türelement (18) die Rastverbindung der zugeordneten Gerätesäule (16) gelöst wird und das Türelement (18) mit der Gerätesäule (16) aus der Sollposition herausgedreht wird.

11. Überwachungseinrichtung (100) nach einem der Ansprüche 9 oder 10, **dadurch gekennzeichnet, dass** jeder Grundkörper (20) Justagemittel aufweist, mittels derer die Drehlage und Neigung der jeweiligen Gerätesäule (16) einstellbar ist.

12. Überwachungseinrichtung (100) nach einem der Ansprüche 1 bis 11, **dadurch gekennzeichnet, dass** jedes Türelement (18) in einer in Längsrichtung der Gerätesäule (16) verlaufenden Nut gelagert ist, und/oder dass jedes Türelement (18) von einer durchsichtigen Platte oder einem Zaunelement gebildet ist.

13. Überwachungseinrichtung (100) nach einem der Ansprüche 1 bis 12, **dadurch gekennzeichnet, dass** die Sollposition jedes Türelements (18) mit Sensormitteln überwacht wird.

14. Überwachungseinrichtung (100) nach Anspruch 13, **dadurch gekennzeichnet, dass** die Sensormittel vom Lichtvorhang (1) gebildet sind, oder dass die Sensormittel von einer nicht überbrückten Strahlachse des Lichtvorhangs (1) gebildet sind, oder dass die Sensormittel von einem am Grundkörper (20) angeordneten Schaltmittel gebildet sind, welche ein die Nullposition kennzeichnendes Referenzziel detektieren.

15. Überwachungseinrichtung (100) nach einem der Ansprüche 13 oder 14, **dadurch gekennzeichnet, dass** abhängig von Signalen der Sensormittel die Sicherheitsfunktion ausgelöst wird.
